# EUROPEAN PATENT APPLICATION

(11) **EP 2 023 086 A2**
(43) Date of publication of application: **11.02.2009**
(21) Application number: 08161050.3
(22) Date of filing: 24.07.2008
(51) Int. Cl.: G01C 21/34

(54) **Navigation system, server, and navigation program**

(30) Priority: 10.08.2007 JP 2007210388
(71) Applicant: Aisin AW Co., Ltd., Fujii-cho Anjo-shi, Aichi 444-1192 (JP)
(72) Inventor: Nakayama, Takaaki, Okazaki-shi Aichi 444-8564 (JP)
(74) Representative: TBK-Patent

(57) **Abstract**

When receiving an input of a destination, a navigation system searches for a travel route by using node data and guides a vehicle along the retrieved travel route. In the course of guiding the vehicle along the travel route, the navigation system detects that, at a branch point of the travel route shown in the guidance, the vehicle abandoned advancing to the travel route after trying to advance. From the fact that the vehicle thus abandoned advancing after once trying to do so, it can be inferred that the travel route is a no-entry road, and therefore, the navigation system appends a no-entry attribute to a link corresponding to the travel route, thereby updating the node data. The contents of the node data thus updated are reflected in the travel route search from the next time, which enables the navigation system to guide the vehicle along a more appropriate travel route.

## Description

### 1. Field of the Invention

The present invention relates to a navigation system, a server, and a navigation program, and for example, to those guiding a vehicle along a travel route.

### 2. Description of the Related Art

In recent years, a navigation system has been in wide use to guide a vehicle.
The navigation system has a function of searching for a route from a place of departure to a destination, a function of detecting the position of a host vehicle by using a global positioning system (GPS) satellite or a sensor such as a gyro sensor, a function of displaying, on a map, the route to the destination and the current position of the vehicle, and so on.

The navigation system stores a node data file including links and nodes, which correspond to roads on the map, and searches for a travel route from the current position to the destination by using the node data file.
For example, attributes regarding traffic regulations such as one-way traffic are associated to the links, and by using these attributes, the navigation system searches for a travel route conforming to the traffic regulations.

Further, there is also a "navigation system" like that disclosed in Japanese Patent Application Publication No. JP-A-2006-64563 which learns from the way a user drives.
In this art, when the user deviates from a retrieved route at a certain point, the navigation system stores this point and gives guidance at this point from the next search.

However, it is difficult for a vehicle with a large width to travel along narrow roads such as narrow streets, and if such roads are included, a great number of roads have to be stored. This has posed a problem that it is difficult to appropriately append attributes such as one-way traffic to all these roads or to update these attributes when the attributes are changed.
Therefore, there has been a possibility that a travel route actually difficult to take may be set.

Under such circumstances, it is an object of the present invention to appropriately set a travel route.

In an invention according to a first aspect, by detecting that a vehicle abandoned advancing to a travel route after trying to advance, it can be inferred that the travel route is a route along which the vehicle has difficulty in traveling or cannot travel.
In an invention according to a second aspect, it is possible to restrict the guidance of the travel route by using a detection result.
In an invention according to a third aspect, since the relevant travel route is excluded from an object of search which is conducted based on route data, it is possible to learn the detection result.
In an invention according to a fourth aspect, by notifying the detection result to a server, it is possible to provide the search result to a third party.
In an invention according to a fifth aspect, it is possible to learn by using a detection result in another vehicle.
In an invention according to a sixth aspect, it is possible to notify the detection result of a vehicle to another vehicle, so that the detection results of the vehicles can be shared by all the vehicles.
In an invention according to a seventh aspect, it is possible to provide a computer program realizing the navigation function according to the first aspect.

FIG. 1 is a system block diagram of a navigation system;
FIG. 2A and FIG. 2B are explanatory views showing examples of guiding a vehicle;
FIG. 3A and FIG. 3B are explanatory views showing how an attribute is appended to a link;
FIG. 4 is an explanatory flowchart showing a travel route guidance procedure;
FIG. 5 is a view showing an example of the configuration of an information distribution system;
FIG. 6 is a diagram showing an example of the hardware configuration of a server;
FIG. 7 is an explanatory flowchart showing a detection result transmission procedure; and
FIG. 8 is an explanatory flowchart showing a notification information transmission procedure.

### (1) Outline of Embodiment

When receiving an input of a destination, a navigation system searches for a travel route by using node data and guides a vehicle along the retrieved travel route.
The node data shows the arrangement of routes by using links and nodes, and in the node data, not only connection relations such as the branching of the routes but also, for example, attributes relating to traffic regulations such as a no-entry regulation are set.
The navigation system searches for and sets a travel route that conforms to these attributes.

In the course of guiding the vehicle along the travel route, the navigation system detects that, at a branch point of the travel route shown in the guidance, the vehicle abandoned advancing to the travel route after trying to advance.
From the fact that the vehicle thus once tried to advance and abandoned advancing, it can be inferred that the travel route is a no-entry road, and therefore, the navigation system appends a no-entry attribute to a link corresponding to the travel route, thereby updating the node data.

The updated contents of such node data are reflected in a travel route search from the next time, which enables the navigation system to guide the vehicle along a more appropriate travel route.
Specifically, the navigation system determines whether or not the vehicle tried to travel along the travel route as guided, and records that the vehicle did not travel as guided after tried to do so. Then, the navigation system sets the no-entry regulation to the corresponding link, and from the next time, it sets a route based on the learning result.

### (2) Details of Embodiment

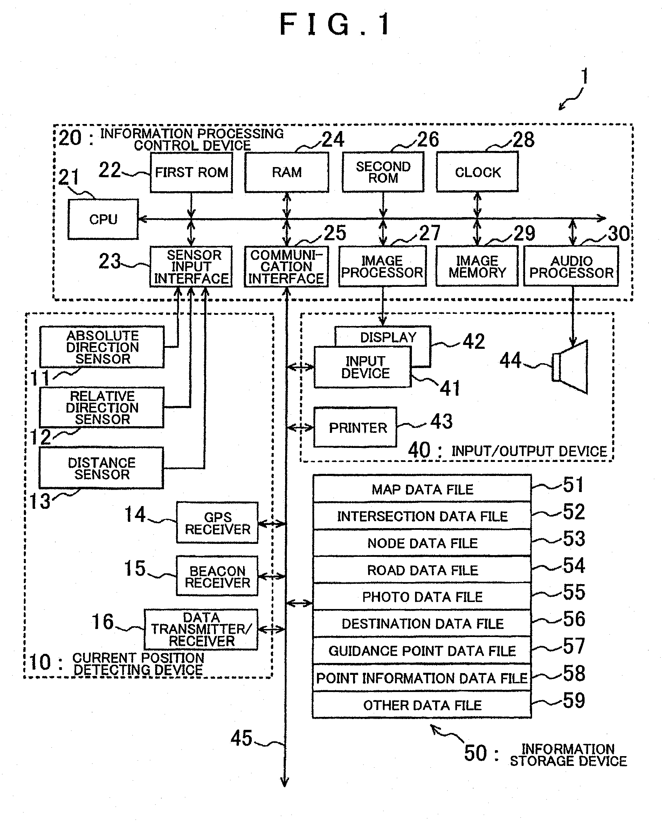

FIG. 1 is a system configuration diagram of a navigation system 1 to which this embodiment is applied.
The navigation system 1 is mounted on a vehicle, and as shown in FIG. 1, it includes a current position detecting device 10, an information processing control device 20, an input/output device 40, and an information storage device 50.
Firstly, the current position detecting device 10 has the following configuration.
An absolute direction sensor 11 is, for example, a geomagnetic sensor which detects in which direction the vehicle is positioned, based on the detection of the N direction by using a magnet, and any device detecting an absolute direction is usable.

A relative direction sensor 12 detects, for example, whether the vehicle has turned at an intersection, and may be an optical rotation sensor or a rotation-type resistance volume sensor attached to a rotation portion of a steering wheel, or may be an angle sensor attached to a wheel portion. Another alternative is a gyro sensor detecting an angle change by using an angular speed.
That is, any device capable of detecting an angle change amount relative to a reference angle (absolute direction) is usable.
A distance sensor 13 may be, for example, a sensor detecting the rotation of the wheel to count the number of the rotations, or a sensor detecting an acceleration to perform integration twice. That is, any device capable of measuring the movement distance of the vehicle may be used.

Examples of other alternatives to be connected to a sensor input interface 23 are a blinker sensor detecting a lighting state of blinkers, a steering wheel sensor detecting a rotation angle of the steering wheel, a sight line sensor detecting a sight line of a user, and the like, though not shown.
These sensors are used to detect that a driver abandoned advancing to a travel route shown in the guidance after trying to advance.

A GPS receiver 14 receives signals from an artificial satellite and is capable of obtaining various pieces of information such as a signal transmission time, position information of the receiver, moving speed of the receiver, and a traveling direction of the receiver.
A beacon receiver 15 receives signals transmitted from transmitters installed at specific points.
In particular, the beacon receiver 15 can obtain vehicle information and communication service (VICS) information, and can obtain information relating to the traveling of the vehicle, such as traffic jam information, current position information, and parking lot information.
Thus, the navigation system 1 includes a current position obtaining (detecting) unit.

A data transmitter/receiver 16 communicates with an external part of the vehicle by using a telephone line or a radio wave to exchange information.
For example, the data transmitter/receiver 16 can be used in various ways such as being used for a car phone, an advanced traffic information system (ATIS), VICS, GPS correction, and inter-vehicle communication, and is capable of receiving/outputting information relating to the traveling.

Next, the information processing control device 20 performs arithmetic operations and controls based on information input from the current position detecting device 10 and the input/output device 40, and based on information stored in the information storage device 50. The information processing control device 20 also controls the system so that the arithmetic operation result is output to output devices such as a display 42, a printer 43, and a speaker 44.

The information processing control device 20 has the following configuration.
A central processing unit (CPU) 21 centrally performs the arithmetic operations and the controls for the whole navigation system 1.
A first ROM 22 stores navigation programs relating to the navigation, and in particular, it stores a navigation program for searching for point information necessary for guiding the vehicle along a route to a destination, a navigation program for outputting the retrieved point information to a RAM 24 and so on so that the point information can be displayed as an image and can be output as audio, a navigation program for searching for the name of a point from its reading by using a point information data file 58 and the like.
A sensor input interface 23 receives information from the current position detecting device 10.

The RAM 24 is a memory storing information input by a user, such as information on a destination and information on a pass-through point, and storing the result of the arithmetic operation which is performed by the CPU 21 based on the information input by the user, the result of the route search, or map information (including the point information) read from the information storage device 50.
A communication interface 25 receives/outputs information input from the current position detecting device 10, in particular, information obtained from an external part.

A second ROM 26 stores a program relating to the navigation, in particular, a navigation program relating to audio guidance.
An image processor 27 is a processor processing vector information, which is processed by the CPU 21, into image information.
A clock 28 counts time.
An image memory 29 stores the image information resulting from the processing by the image processor 27.
An audio processor 30 processes audio information read from the information storage device 50 to output the result to the speaker 44.

The input/output device 40 is composed of: an input device 41 to which the user inputs data such as a destination, a pass-through point, and a search condition; the display 42 displaying an image, a search result, and so on; the printer 43 printing information; and the speaker 44 outputting audio.
The input device 41 is constituted by, for example, a touch panel, a touch switch, a joystick, a key switch, or the like.

The information storage device 50 is connected to the information processing control device 20 via a transmission path 45.
The information storage device 50 stores a map data file 51, an intersection data file 52, a node data file 53, a road data file 54, a photo data file 55, a destination data file 56, a guidance point data file 57, the point information data file 58, and other data file 59.
The information storage device 50 is generally constituted by a hard disk, a flash memory, or the like which is a rewritable storage medium, but may be used together with a ROM such as a CD-ROM or a DVD-ROM.

The map data file 51 stores map data such as a national road map, a road map of an arbitrary district, or a residence map.
The road map includes roads such as major trunk roads, expressways, and narrow streets (relatively narrow roads) and landmark objects (facilities and the like) on the roads. The residence map is a town map showing graphics representing outlines of buildings and the like on the roads, road names, and so on.

The intersection data file 52 stores data relating to intersections, such as geographical positional coordinates and names of intersections.
The road data file 54 stores data relating to roads, such as positions, kinds, and the number of lanes of the roads and connection relations among the roads.

The node data file 53 stores node data which is used for the route search and shows, on a map, geographical coordinate data and so on of nodes.
For example, connection points of roads such as intersections are shown as nodes, and roads between the connection points (that is, areas in which roads do not branch off) are shown as links. Thus, the node data serves as route data showing the connection relations among node data routes.
Further, if traveling along some links is limited by traffic regulations such as a no-entry regulation and a one-way regulation, attributes representing these regulations are appended to the links.

In this embodiment, the attributes are stored directly in the node data, but they may be stored in the road data file 54 or the like in correspondence to the links.
The navigation system 1 searches for a travel route from a current position to a destination by tracing the links and the nodes of the node data.
At this time, the navigation system 1 excludes a link where the passage is prohibited because of the no-entry or one-way regulation, from a search object by referring to the attributes, and searches for a travel route conforming to the traffic regulation to guide the vehicle along the retrieved travel route.

The photo data file 55 stores image data, computer graphics image data, and the like of photos of various facilities, sightseeing spots, or places such as major intersections whose visual display is required.
The destination data file 56 stores data such as positions, names, and the like of places, facilities, and so on which are highly likely to be destinations, such as major sightseeing spots, buildings, and companies and offices listed in telephone directories.
The guidance point data file 57 stores guide data of points where guidance is necessary, such as the contents of guide boards installed on roads and guidance of branch points.

The point information data file 58 stores the point information. The point information is also called point of interest (POI) information and is information relating to points in which a user is likely to be interested during the route guidance and the like, such as, for example, athletic stadiums, theaters, shops such as restaurants and department stores, schools, governmental facilities, welfare facilities, headquarters, branches, and local offices of private companies, and sightseeing spots, and is specifically information such as display character strings of the names, reading of the display character strings, correspondence information of the display character strings and the reading, coordinates, addresses, telephone numbers, and other items of these points. The point information serves as objects of the search.
Further, the information storage device 50 stores the other data file 59.

In the following manner, the navigation system 1 as configured above detects that a driver abandoned advancing to a travel route after trying to advance.
For example, when the blinker sensor is used, the navigation system 1 detects that, at a branch point, the driver lighted the blinker indicating a direction of the travel route shown in the guidance, thereby detecting that the driver tried to advance in the direction as guided.
Thereafter, the navigation system 1 detects that the driver lighted off the blinker or lighted on the blinker indicating the opposite direction to advance to a route different from the route shown in the guidance, thereby detecting that the driver abandoned advancing to the travel route shown in the guidance.

When the steering wheel sensor is used, the navigation system 1 detects that, at a branch point, the driver rotated the steering wheel in the direction of the travel route shown in the guidance by a predetermined angle or more, thereby detecting that the driver tried to advance in the direction shown in the guidance.
Thereafter, the navigation system 1 detects that the driver returned the steering wheel or rotated the steering wheel in the other direction to advance to a route different from the route shown in the guidance, thereby detecting that the driver abandoned advancing to the travel route shown in the guidance.

When the sight line sensor is used, the navigation system 1 detects that, at a branch point, the driver moved his/her sight line in the direction of the travel route shown in the guidance, by a predetermined amount (for example, an amount obtained by averaging the positions of the sight line weighted by the time during which the sight line is kept), thereby detecting that the driver tried to advance in the direction shown in the guidance.
Thereafter, the navigation system 1 detects that the driver turned his/her sight line away from the travel route shown in the guidance to advance to a route different from this travel route, thereby detecting that the driver abandoned advancing to the travel route shown in the guidance.

An alternative structure for the navigation system 1 to detect that the driver abandoned advancing to the travel route shown in the guidance is to detect that the driver tried to advance in the direction shown in the guidance, based on the vehicle's entrance to the travel route shown in the guidance and thereafter detect that the vehicle moved back or made a U-turn to advance to another route.
A still another alternative structure for the navigation system 1 to determine that the user tried to advance to the travel route but abandoned advancing is to detect that the vehicle turned right or left at a branch point after stopping for a predetermined time at the branch point, even though the navigation system 1 instructed the driver to go straight at the branch point.

When the navigation system 1 guides the vehicle along a certain route and the vehicle abandons advancing to this travel route after trying to do so, the navigation system 1 counts the number of times such situation takes place for each travel route.
Then, when the number of times reaches a predetermined number of times (for example, three times), the navigation system 1 changes the attribute of a link corresponding to this travel route in the node data file 53 in order not to guide the vehicle along this travel route next time.

In this embodiment, the condition under which the attribute of the link is changed is that the counted number of times reaches a predetermined number of times, but various conditions are applicable: for example, the attribute is changed when such situation takes place once, or the attribute is changed when the user answers "Yes" to an inquiry such as "Is this road impassable?"

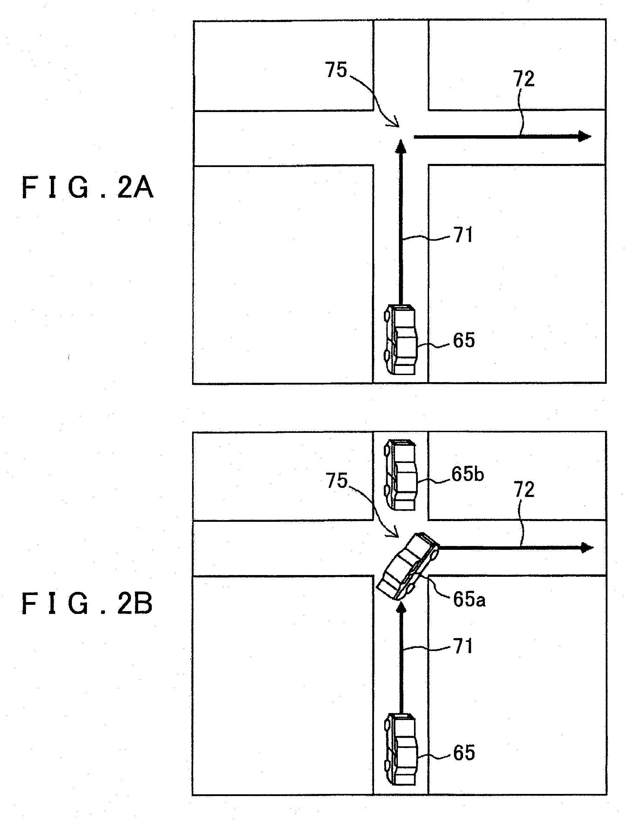

FIG. 2A is an explanatory view showing an example where the navigation system 1 guides a vehicle.
In this example, the navigation system 1 is mounted on a vehicle 65 and guides the driver along a travel route so that the vehicle travels in a direction of an arrow 71 to turn right in a direction of an arrow 72 at an intersection 75 (branch point of the route).
It is assumed that, after thus guided along the travel route by the navigation system 1, the vehicle 65 tries to advance to the travel route of the arrow 72 shown in the guidance as a vehicle 65a in FIG. 2B does but abandons advancing, and then advances to a route different from the travel route as a vehicle 65b does.

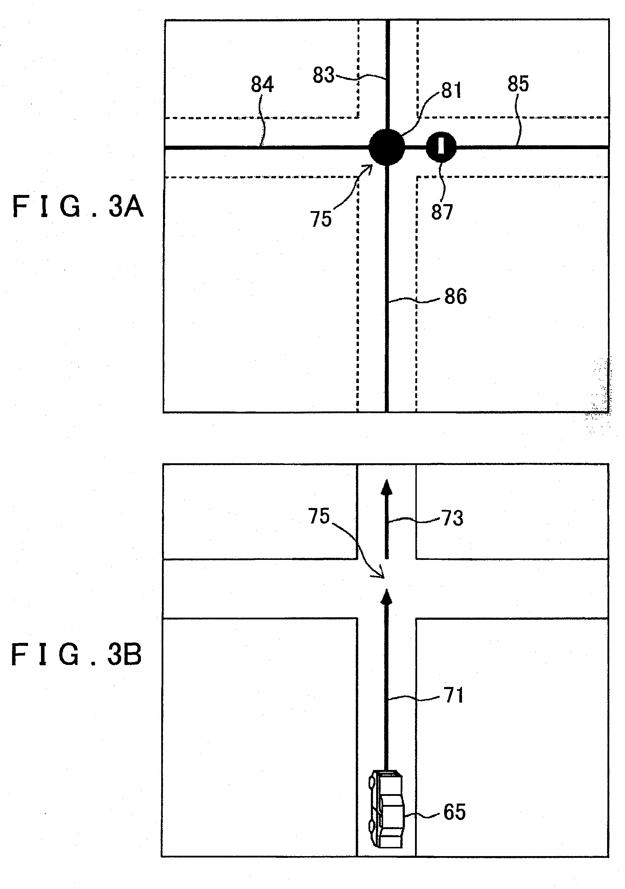

In this case, the navigation system 1 changes the attribute of the link as shown in FIG. 3A.
Specifically, in the node data, at the intersection 75, links 83 to 86 are set, with a node 81 being their point of intersection.
The links 83 to 86 correspond to routes intersecting at the intersection 75, and in the route guidance shown in FIG. 2A, the vehicle is guided to travel from the link 86 to the link 85.

The vehicle 65 (not shown) abandons advancing from the link 86 to the link 85 after trying to do so, and advances to the link 83, and therefore, the navigation system 1 appends, to the link 85, the attribute indicating that the advancement from the node 81 to the link 85 is not possible.
In order to append this attribute, a flag showing that entrance from the node 81 to the link 85 is prohibited is added to the link 85, for instance.
In FIG. 3A, this flag is schematically shown as a no-entry mark 87.

From the fact that the vehicle 65 abandoned advancing from the node 81 to the link 85 after trying to do so, it can be inferred that, for example, entrance from the intersection 75 to the route of the link 85 is prohibited.
Therefore, the navigation system 1 learns from this inference to change the attribute of the link 85 so that the vehicle does not advance to this route from the intersection 75.
In this case, the advancement from the node 81 to the link 85 is not possible, and therefore, after updating the node data, the navigation system 1 regards the link 85 as a one-way road where the traffic toward the node 81 is allowed.

After the attribute of the link is thus changed in the node data file 53, this change is reflected in the next route search.
In the case of FIG. 3A, since the advancement from the node 81 to the link 85 is not allowed, the navigation system 1 guides the vehicle 65 along, for example, a travel route so that the vehicle 65 travels along a route shown by the arrow 71 to pass through the intersection 75 and then travels straight to a route shown by an arrow 73, as shown in FIG. 3B.

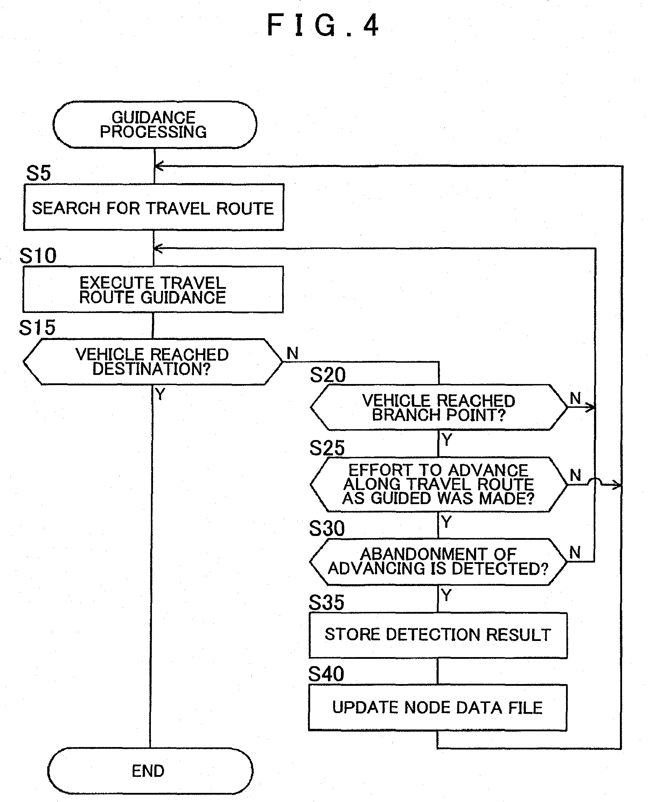

Next, a travel route guidance procedure performed by the navigation system 1 will be described by using the flowchart in FIG. 4.
First, the navigation system 1 receives a user's input of a destination and at the same time obtains a current position by using the GPS receiver 14 or the like.
Then, the navigation system 1 searches for a travel route from the current position to the destination by referring to the node data in the node data file 53 (Step 5).
Thus, the navigation system 1 includes a route search unit searching for the travel route to the destination, based on the route data (node data) showing the connection relations of routes.

Then, the navigation system 1 executes the travel route guidance (Step 10).
Thus, the navigation system 1 includes a guiding unit guiding the vehicle along a travel route.
Next, the navigation system 1 determines whether or not the vehicle has reached the destination (Step 15), and if the vehicle has reached the destination (Step 15; Y), the navigation system ends the guidance processing.
If the vehicle has not reached the destination (Step 15; N), the navigation system 1 determines whether or not the vehicle has reached a branch point (Step 20).

If the vehicle has not reached the branch point (Step 20; N), the navigation system 1 returns to Step 10 to continue the guidance of a travel route.
If the vehicle has reached the branch point (Step 20; Y), the navigation system 1 determines whether or not the vehicle tried to advance to the travel route shown in the guidance (Step 25).
If the vehicle did not try to advance to the travel route shown in the guidance (Step 25; N), the navigation system 1 returns to Step 5 to search for a travel route up to the destination from a route to which the vehicle is going to advance.

If the vehicle tried to advance to the travel route shown in the guidance (Step 25; Y), the navigation system 1 determines whether or not the vehicle abandoned advancing (Step 30).
Thus, the navigation system 1 includes an abandon detecting unit which detects that, at the branch point where the travel route shown in the guidance branches off into another route, the vehicle 65 abandoned advancing to the travel route shown in the guidance after trying to do so.
If the abandoning of the advancement is not detected (Step 30; N), the navigation system 1 returns to Step 10 to continue the guidance of the travel route.

On the other hand, if the abandoning of the advancement is detected (Step 30; Y), the navigation system 1 makes the detection result output to the RAM 24 (FIG. 1) or the like to make the detection result stored in the RAM 24 (Step 35).
This detection result includes information specifying a node where the advancement is abandoned, a direction in which the vehicle tried to advance, date and time of this detection, and so on.
Thus, the navigation system 1 includes an output unit outputting the detection result detected by the abandon detecting unit.

Next, the navigation system 1 updates the node data file 53 by using the stored detection result (Step 40) and returns to Step 5 to search for a travel route from the route to which the vehicle advanced up to the destination.
In order to update the node data file 53, an attribute indicating that the advancement in the direction recorded in the detection result is not possible is appended to the node recorded in the detection result.

The change in the node data file 53 thus updated is reflected in the next route search.
More specifically, in the next route search, for example, the link set as a no-entry road is excluded from a search object, thereby preventing this link from being set as the travel route, and consequently, the navigation system 1 imposes the restriction so that the vehicle is not guided along this travel route.
Thus, the navigation system 1 includes a restricting unit which restricts the guiding unit from guiding the vehicle along the route from the branch point to this travel route, by using the detection result output to the RAM 24 or the like. For this restriction, the restricting unit excludes the route from the branch point to the travel route, from an object of the search which is conducted based on the route data (node data).

The above-described embodiment can provide the following effects.
(1) By using a sensor or the like, the navigation system 1 can detect that, at a branch point, the vehicle abandoned advancing to a travel route after trying to do so.
(2) When the vehicle abandoned advancing to the travel route at the branch point after trying to do so, the navigation system 1 can update the node data file 53 so that this travel route is set as a no-entry route.
(3) Since the update result of the node data file 53 is reflected in the route search from the next time, it is possible to enhance accuracy of the route search every time the node data file 53 is updated.

### (Modified Example 1)

In this modified example, after the detection results of vehicles are collected and aggregated by a server, the results are distributed from the server to the vehicles, so that the detection results of the vehicles are shared by all the vehicles.

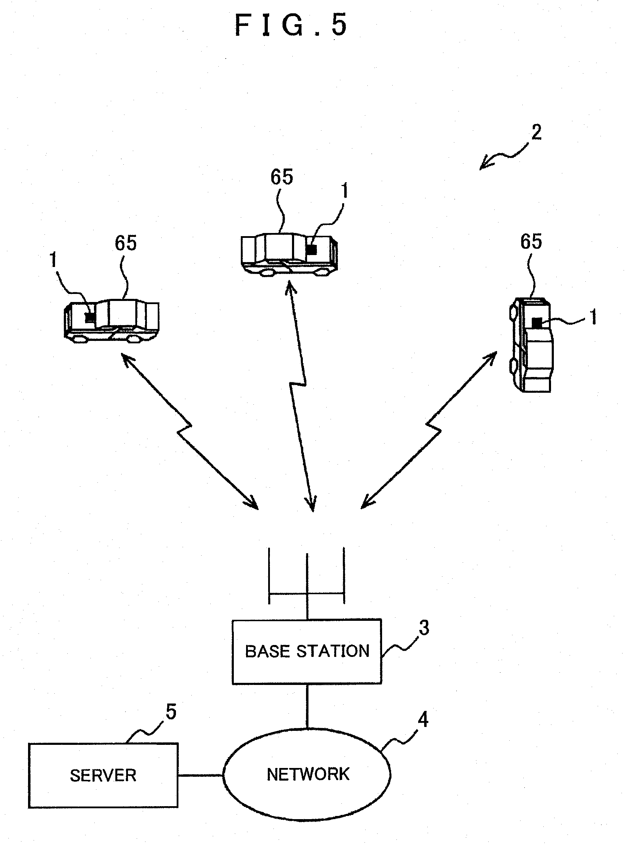

FIG. 5 is a view showing an example of the configuration of an information distributing system according to this modified example.
There are a plurality of vehicles 65, 65, ... (hereinafter, vehicles 65), each of which is equipped with the navigation system 1. Each of the navigation systems 1 is capable of communicating with a base station 3 by using the data transmitter/receiver 16 (FIG. 1).

The base station 3 is, for example, a base station of a mobile phone network. Only one base station 3 is shown in FIG. 5, but actually, the plural base stations 3 are located in all over a communication area of mobile phones so as to cover the whole communication area.
For example, the navigation system 1 of each of the vehicles 65 switches a communication partner base station 3 while moving so as to be capable of communicating with the closest base station 3.

A network 4 is a communication network constituted by a mobile phone network, the Internet, or the like and connects the base station 3 and the server 5.
Thus, the server 5 and the navigation systems 1 can communicate with each other via the network 4 and the base station 3.
The server 5 communicates with the navigation systems 1 to receive the detection results from the navigation systems 1 and stores the detection results.

Then, the server 5 aggregates these stored detection results to generate notification information and transmits the notification information to all the navigation systems 1.
The notification information includes nodes and attributes such as, for example, a no-entry attribute set to the corresponding nodes and includes the detection results of the navigation systems 1.

When receiving the notification information from the server 5, each of the navigation systems 1 updates the node data file 53 by using the notification information.
Specifically, in the notification information, the attributes are appended to the nodes, and therefore, each of the navigation systems 1 searches the node data file 53 for a node corresponding to the node recorded in the notification information, and updates the node data file 53 by replacing an attribute of the retrieved node by the attribute recorded in the notification information.

For example, when an attribute of no-entry in a certain direction is set as an attribute of a node in the notification information, each of the navigation systems 1 searches the node data file 53 for a node corresponding to this node, and an attribute of no-entry in this direction is appended to the retrieved node.
Thus, the navigation system 1 can learn the learning results of the other vehicles 65 via the notification information.

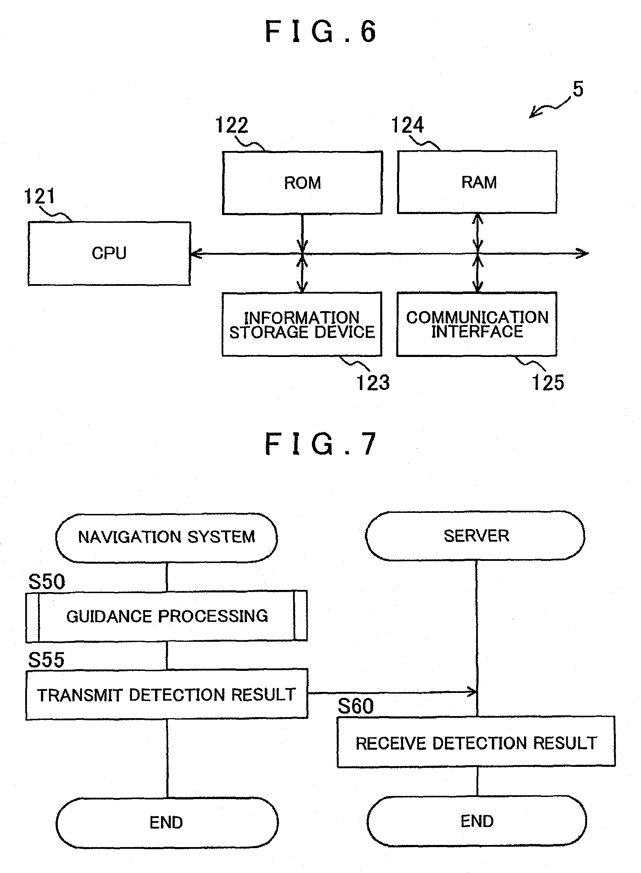

FIG. 6 is a diagram showing an example of the hardware configuration of the server 5.
The server 5 includes a CPU 121, a ROM 122, a RAM 124, an information storage device 123, a communication interface 125, and so on which are connected to one another via a bus line.
The CPU 121 is, for example, a central processing unit which processes information in various ways by using programs, parameters, data, and the like stored in the information storage device 123, the ROM 122, the RAM 124, and so on, and in this modified example, the CPU 121 performs the receipt of the detection results from the navigation systems 1, the generation of the notification information, the transmission of the notification information to the navigation systems 1, and so on.

The ROM 122 is a read-only memory and stores basic programs, parameters, and so on necessary for the server 5 to operate.
The RAM 124 is a readable and writable memory and offers a working memory used by the CPU 121 for the information processing.

The information storage device 123 includes a mass storage medium such as, for example, a hard disk, and it stores: computer programs used by the CPU 121 for the receipt of the detection results from the navigation systems 1, the generation of the notification information, the transmission of the notification information to the navigation systems 1, and so on; database in which the detection results received from the navigation systems 1 are stored; and so on.

FIG. 7 is an explanatory flowchart showing a procedure for the navigation system 1 to transmit the detection result to the server 5.
Upon completion of the guidance processing shown in FIG. 4 (Step 50), the navigation system 1 establishes a communication line to the server 5 and transmits the detection result detected in the current guidance to the server 5 (Step 55).
Thus, the navigation system 1 includes a detection result transmitting unit which transmits, to a predetermined server (server 5), the detection result output to the RAM 24 or the like.

The server 5 receives the detection result from the navigation system 1 (Step 60), and stores the detection result in the database of the information storage device 123 (FIG. 6).
Thus, the server 5 includes a detection result receiving unit which receives, from the navigation system 1, the detection result that, at a branch point where a travel route shown in the guidance branches off into another route, the vehicle abandoned advancing to the travel route shown in the guidance after trying to do so.

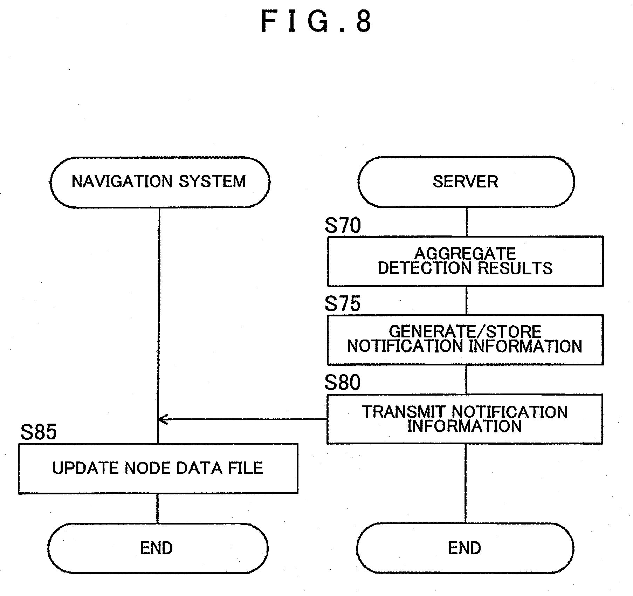

FIG. 8 is an explanatory flowchart showing a procedure for the server 5 to transmit the notification information to the navigation systems 1.
The server 5 aggregates the detection results stored in the database (Step 70) to generate the notification information and stores the notification information in the information storage device 123 (Step 75).
The server 5 aggregates the detection results by, for example, batch processing about once a day.
Thus, the server 5 includes a notification generating unit which, by using the detection results received from the navigation systems 1, generates the notification (notification information) indicating that, at a branch point where a travel route shown in the guidance branches off into another route, a vehicle abandoned advancing to the travel route shown in the guidance after trying to do so.

Next, the server 5 transmits the stored notification information to the navigation systems 1 (Step 80).
Thus, the server 5 includes a notification transmitting unit transmitting the generated notification (notification information) to the navigation systems 1.
For this transmission processing, the server 5 side may connect to the navigation systems 1 to establish the communication lines, or the navigation systems 1 sides may connect to the server 5 to establish communication lines.

A possible structure in the latter case may be that, for example, the navigation systems 1 automatically connect to the server 5 at the power-on time, and download the notification information from the server 5.
Another possible structure may be, for example, that when the navigation systems 1 transmit the detection results to the server 5, the server 5 transmits the notification information to the navigation systems 1 while keeping the connection of the communication lines.

Each of the navigation systems 1 receives the notification information from the server 5 and updates the node data file 53 by using the notification information (Step 85).
Thus, the navigation system 1 includes a notification receiving unit which receives from a predetermined server (server 5) the notification (notification information) indicating that, at a branch point where a travel route along which another vehicle was guided branches off into another route, the other vehicle abandoned advancing to the travel route shown in the guidance after trying to do so.
Further, the navigation system 1 updates the node data file 53, thereby restricting the guidance of a route extending from the branch point involved in the notification to the travel route involved in the notification.

### (Modified Example 2)

In the above-described embodiment and modified example 1, the navigation system 1 has the node data file 53 and the navigation system 1 searches for a route and guides the vehicle along the travel route, but the server 5 can be structured to serve these functions.
In this case, the server 5 stores the data files including the node data file 53 which are stored in the information storage device 50 in FIG. 1.

The navigation system 1 transmits, to the server 5, a current position, a destination, states of the vehicle such as the current position and vehicle speed, and the server 5 searches for a route and guides the vehicle.
Further, the navigation system 1 transmits, to the server 5, a detection value of, for example, the blinker sensor, the steering wheel sensor, the sight line sensor, or the like, and by using the detection value, the server 5 detects that the vehicle 65 abandoned advancing to the travel route shown in the guidance after trying to do so.
Then, the server 5 updates the node data by using the detection result.
The updated node data is shared by all the vehicles 65.

When receiving an input of a destination, a navigation system searches for a travel route by using node data and guides a vehicle along the retrieved travel route. In the course of guiding the vehicle along the travel route, the navigation system detects that, at a branch point of the travel route shown in the guidance, the vehicle abandoned advancing to the travel route after trying to advance. From the fact that the vehicle thus abandoned advancing after once trying to do so, it can be inferred that the travel route is a no-entry road, and therefore, the navigation system appends a no-entry attribute to a link corresponding to the travel route, thereby updating the node data. The contents of the node data thus updated are reflected in the travel route search from the next time, which enables the navigation system to guide the vehicle along a more appropriate travel route.

## Claims

1. A navigation system comprising:
a guiding unit adapted to guide a vehicle along a travel route;
an abandon detecting unit adapted to detect that, at a branch point where the travel route shown in the guidance branches off into another route, the vehicle abandoned advancing along the travel route shown in the guidance after trying to advance; and
a storage unit adapted to store a result of the detection.

2. The navigation system according to claim 1, further comprising a restricting unit adapted to restrict the guiding unit from guiding the vehicle along a route extending from the branch point to the travel route, by using the stored detection result.

3. The navigation system according to claim 2, further comprising a route search unit adapted to search for the travel route to a destination based on route data showing a connection relation of the route, wherein:
the guiding unit is adapted to guide the vehicle along the searched travel route; and
the restricting unit is adapted to perform the restriction by excluding the route extending from the branch point to the travel route, from an object of the search which is conducted based on the route data.

4. The navigation system according to any one of claims 1, 2, and 3, further comprising a detection result transmitting unit adapted to transmit the stored detection result to a predetermined server.

5. The navigation system according to claim 1 or 2, further comprising a notification receiving unit adapted to receive from a predetermined server a notification indicating that, at a branch point where a travel route, along which another vehicle was guided, branches off into another route, the another vehicle abandoned advancing to the travel route shown in the guidance after trying to advance, wherein
the restricting unit is adapted to restrict the guiding unit from guiding the host vehicle along a route extending from the branch point involved in the notification to the travel route involved in the notification.

6. A server comprising:
a detection result receiving unit adapted to receive, from the navigation system according to claim 4, the detection result indicating that, at the branch point where the travel route shown in the guidance branches off into the other route, the vehicle abandoned advancing to the travel route shown in the guidance after trying to advance;
a notification generating unit which, by using the received detection result, is adapted to generate a notification indicating that, at the branch point where the travel route shown in the guidance branches off into the other route, the vehicle abandoned advancing to the travel route after trying to advance; and
a notification transmitting unit adapted to transmit the generated notification to the navigation system according to claim 5.

7. A navigation program causing a computer to realize:
a guiding function of guiding a vehicle along a travel route;
an abandon detecting function of detecting that, at a branch point where the travel route shown in the guidance branches off into another route, the vehicle abandoned advancing to the travel route shown in the guidance after trying to advance; and
a storage function of storing a result of the detection.
